# EUROPEAN PATENT APPLICATION

(11) **EP 1 521 447 A2**
(43) Date of publication of application: **06.04.2005**
(21) Application number: 04018301.4
(22) Date of filing: 02.08.2004
(51) Int. Cl.: H04N 1/00

(54) **Technique for identification of information based on protocol markers**

(30) Priority: 30.09.2003 US 675197
(71) Applicant: Network Appliance, Inc., Sunnyvale, California 94089 (US)
(72) Inventor: Armitano, Robert, Palo Alto CA 94301 (US)
(74) Representative: Rupprecht, Kay, Dipl.-Ing.

(57) **Abstract**

The disadvantages of the prior art are overcome by providing a technique for identification of information based upon protocol markers. According to the technique a signature is generated from a protocol used to store, distribute and transport time-variant multi-dimensional information, such as "real-world" signal and multi-media data that uniquely identifies the information. The signature comprises a set of protocol markers that is unique to the protocol. Using the extracted signature, the system and method can differentiate amongst a plurality of data. Identification of the data is necessary to ensure uniqueness of that information and to compare various data in a distributed environment.

## Description

### FIELD OF THE INVENTION

The present invention relates to identification of information and, in particular, to the identification of time-variant multi-dimensional information in a distributed network using a signature generated from protocol markers contained in the information.

### BACKGROUND INFORMATION

In modem network environments, information may be stored in a plurality of remote locations using a wide variety of storage mechanisms. For example, information embodied as a file in a storage system's file system may be stored on a disk locally attached to a computer, on a storage system connected to a computer via a network attached storage (NAS) arrangement, or by a high-speed storage area network (SAN) configuration. In a network storage configuration, e.g., a NAS or SAN environment, various intermediate nodes may be present including, for example, routers, switches, network caching devices and file caching devices. Copies of the information persist for a period of time consistent with the intermediate node functionality.

Applications executing on devices in a network often desire to compare or otherwise differentiate information that is stored in a plurality of remote locations. For example, an application executing on a networked computer may desire to know whether information such as data stored locally on a disk is identical to data stored across a network on disks attached to a storage system. This may include when the information is time variant multi-dimensional information, such as a multi-media signal, that occupies a large amount of space and require a significant amount of bandwidth to transmit across a network. As a further example, a network caching device may desire to know if data stored in its local cache is identical to data currently being requested from a remotely located data store. If the data that is stored locally is identical to the data stored remotely, the network caching device may forego the need of issuing networked-base data access commands to obtain the requested data, thereby improving system performance speed and reducing network bandwidth loads by eliminating unnecessary data requests and transfers.

This differentiation of the data may be accomplished by comparing the two data sources. Traditionally, data has been compared using a bit-by-bit comparison wherein each bit of the first data source is compared with its corresponding bit in the second data source. Any differences between the two data sources may be identified using this "brute force" technique. However, noted disadvantages of such a bit-by-bit comparison are the high level of computational power expended and the time required to perform such a comparison, especially on large data files. Another noted disadvantage is the possibility of needing to transmit the entire data file over a network to perform the bit-by-bit comparison, thereby eliminating any potential gains in reducing bandwidth consumption.

An alternate method for differentiating data is the use of a cross-correlation technique, whereby a correlation procedure is performed between the two sets of data to determine if they contain the same content. Cross correlation techniques may be effective, when, for example, the data is stored in differing file systems that have differing headers (e.g., metadata) prepended to the actual data, for example, when one copy of the data is stored using the Microsoft Windows NT file system (NTFS) and a second copy of the data is stored using a UNIX-based file system, such as the original Unix File System format (UFS) or Berkely Fast File System (FFS). However, the cross-correlation method is also computationally intensive for large data files. Moreover, to improve the correlation results a larger amount of data needs to be transmitted, again reducing any potential bandwidth consumption savings.

A third conventional method for comparing two data sets involves the use of metadata, which allows a user to quickly compare large volumes of data. Examples of metadata that may be used to compare data include file names, sizes, and/or dates of creation. As noted above, various computer systems may implement metadata differently. For example, some systems may have a limit on the number of characters that may be in the file name or may not permit certain characters to be used in a file name. Additionally, some systems may record a date of creation and a date when a file was last modified; however, other systems may only record the date a file was originally created and not later modification dates.

However, a noted disadvantage of the metadata comparison method is the possibility of negative matches occurring even where identical content is present due to differences in the associated metadata. Similarly, it is possible to obtain a positive match when the data content is not identical, but when the metadata indicates a match. Metadata information is not uniformly implemented and/or deployed in heterogeneous networks such as the Internet. Thus, it is possible to encounter differences in the metadata associated with two data files even when the underlying data is identical. For example, assume two identical copies of a file with differing filenames. Decisions based on matching or non-matching of comparisons of metadata associated with the files may be incorrect and lead to erroneous conclusions.

The typical techniques for comparing or identifying information have noted disadvantages. As network environments grow larger and the use of remotely stored data expands, a significant amount of computational time and network resources may be wasted in identifying and comparing data across a network.

### SUMMARY OF THE INVENTION

The disadvantages of the prior art are overcome by providing a technique for identification of information based upon protocol markers. According to the technique a signature is generated from a protocol used to store, distribute and transport time-variant multi-dimensional information, such as "real-world" signal and multi-media data that uniquely identifies the information. The signature comprises a set of protocol markers that is unique to the protocol. Using the extracted signature, the system and method can differentiate amongst a plurality of data. Identification of the data is necessary to ensure uniqueness of that information and to compare various data in a distributed environment.

The storage, distribution or transportation of real-world signal, such as an audio visual scene, onto a medium requires a transformation of that information via a protocol. This protocol transformation results in a representation of the information that is matched to the appropriate medium. In case of time variant multi-dimensional information (content), the protocol is typically used to transform the information into a form suitable to the medium. Such transformation may include a sampling stage, followed by one or more conversion stages, a quantization stage, and finally an entropy compression stage. Each type of transformation illustratively, represented by a different operation, results in unique markers in the transformed content that enables a device implementing the novel technique to identify and differentiate content resulting from transformations related to the specific protocol.

By utilizing a priori knowledge of how the specific protocol is implemented, residual protocol markers embedded in content are utilized to quickly and efficiently identify the content. These protocol markers are by-products of the specific mathematical transformations performed in the course of encoding, e.g., a real-world signal to a medium via the specified protocol. Each specific protocol, e.g., MPEG-2, JPEG, etc., contains a unique set of protocol markers derived from the protocol. The use of the protocol markers to identify content eliminates the need for computationally expensive bit-by-bit comparisons or reliance on metadata implementations. By utilizing the known protocol markers, content may be quickly identified and/or compared to determine uniqueness. As protocols typically reduce or compress the representation of the underlying information, these protocols also typically provide unique markers that are condensed from the information, thereby requiring fewer computational resources to identify and differentiate.

### BRIEF DESCRIPTION OF THE DRAWINGS

The above and further advantages of the invention may be understood by referring to the following description in conjunction with the accompanying drawings in which like reference numerals indicate identical or functionally similarly elements:
Fig. 1 is a schematic block diagram of an exemplary network environment in accordance with an embodiment of the present invention;
Fig. 2 is a schematic block diagram of an exemplary protocol conversion flow in accordance with an embodiment of the present invention;
Fig. 3 is a schematic block diagram of an exemplary protocol conversion flow for MPEG-2 protocol in accordance with an embodiment of the present invention;
Fig. 4 is a schematic block diagram of an exemplary content comparator in accordance with an embodiment of the present invention;
Fig. 5 is a flow chart detailing the steps of a procedure for comparing content in accordance with an embodiment of the present invention; and
Fig. 6 is a flow chart detailing the steps of a procedure performed by networked caching device utilizing the teachings of the present invention.

### DETAILED DESCRIPTION OF AN ILLUSTRATIVE EMBODIMENT

By way of further background, time variant multi-dimensional information (TVMD), which may be further identified as a "real-world" multi-sensory or, more generally, multi-media signal information, typically contains a protocol markers that uniquely identifies the information. The storage, distribution or transportation of such a real-world signal, e.g., an audio/visual representation, onto a networking medium requires a transformation of the information via a defined protocol. Examples of such a defined protocol include the well-known Moving Picture Expert Group (MPEG), Joint Photographic Expert Group (JPEG) and Graphics Interchange Format (GIF) protocol specification formats. It should be noted that the teachings of the present invention are applicable to any protocol that includes or generates appropriate protocol markers, as described further below, in the transformed data. These protocol transformations result in a representation of the information that is matched to the desired medium. This representation will be termed as "content" or "data content" herein.

The transformation, via the defined protocol, may include various steps, including, a sampling stage, one or more conversion stages, a quantization stage and/or an entropy compression stage. Each stage in the transformation "chain" is described by one or more individually defmed components of the protocol specification. Each protocol stage typically reduces the information content of the original signal and, in the case of non-expansive transformations, works to compress the information contained in the original signal. The resulting compression chain enables easier transmission of the content via digital transmission media, such as local area networks (LANs) utilizing Ethernet-based cabling or other transport channel. Typically each stage also generates a protocol marker in the content that may be analyzed without reading the entire information content. Each specific protocol transforms content according to a well-known protocol specification. By inverting the transformations and traversing the transformation chain in reverse order, the original signal may be recovered, albeit with possible distortions introduced by the loss of information content. The novel system and method of the present invention utilizes the transformed information's protocol markers to generate a signature that uniquely identifies information without requiring a bit by bit comparison or relying on metadata associated with the information.

### A. Exemplary Network Environment

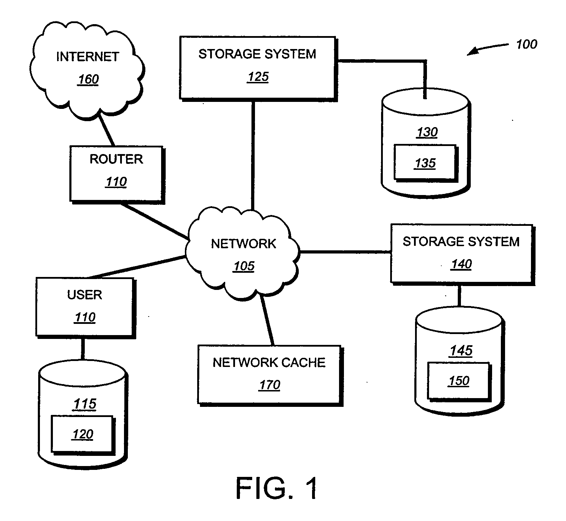

Fig. 1 is a schematic block diagram of an exemplary network environment 100 in which the principles of the present invention may be implemented. The network environment 100 is based around a network cloud 105, which may comprise point-to-point links, a wide area network (WAN), a virtual private network (VPN) implemented over a public network, a shared local area network (LAN) or any other acceptable networking architecture. Attached to the exemplary network cloud 105 is an intermediate node, such as a router 155 that may connect the network cloud 105 to other networks including, e.g., the well-known Internet 160. Additionally, a user system 110, e.g., a workstation or personal computer (PC), is connected to the network 105 via a conventional network interface controller (NIC) (not shown). Connected to the user system 110 is a storage device 115 which, in the illustrative embodiment, comprises a disk.

Also connected to the network cloud 105 are a first storage system 125, which may comprise a file server or other storage appliance having a storage device 130, a second storage system 140 (and associated storage device 145) and a network or file-system caching device 170. The network or file-system caching device 170 stores recently retrieved data so that it may forward its local copy of data to a requesting system instead of forwarding a network data access request. It should be noted that the techniques of the present invention may be practiced in many alternate networking configurations. As such, the exemplary network environment 100 of Fig. 1 should be taken as illustrative only.

Often, it may be desirous to identify multi-media or multi-sensory data (or content) when, for example an application program (not shown) executing on the user system 110 desires access to a remote file 135 stored on storage device 130 of first storage system 125 or a remote file 150 stored on storage device 145 of second storage system 140. In such a situation, it would be desirous to know if the data stored locally, i.e., file 120, is identical to the remotely stored file 135 (or file 150). If the data content of the remote and local files is identical, network bandwidth is conserved by accessing the locally stored file. Additionally, as accesses to locally attached disks are typically faster than access to network-attached disks, performance of the user system 110 is increased by accessing local file 120 instead of remote file 135 (or file 150).

As noted, one method of determining whether the content of the remote and local files is identical involves the use of a conventional data comparison technique. Here, the user system 110 performs a bit-by-bit comparison of local file 120 and e.g., remote file 135. However, in the course of performing the comparison, the entire remote file needs to be transferred over the network cloud 105 from the first storage system 125 to the user system 110, thereby obviating any improvements to system performance or savings of network bandwidth. Alternatively, the user system 110 may rely on metadata associated with files 120 and 135. However, if, for example the user 110 implements a file system that is different from a file system implemented by the first storage system 125, a distinct possibility exists that the metadata may not generate a correct match or may generate false positives or negtives.

In accordance with the present invention, however, the user may acquire a set of unique protocol markers from the file 120 and file 135. The markers are derived directly from the underlying information and are uniquely associated with this data. These protocol markers are then compared to quickly determine whether file 120 is identical to file 135. Using the teachings of the present invention, the only information that needs to be transmitted over the network cloud 105 from storage system 125 to the user system 110 are the unique protocol markers, which are typically orders of magnitude smaller than the complete file size. Note that the inventive technique applies similarly to network or file-system caching device 170.

### B. Protocol Marker Generation

Protocol markers are generated as a byproduct of the conversion of TVMD content into a form suitable for transmission over a transport medium in a computer network. The protocol markers are embedded in the resulting converted content and comprise residuals of various mathematical transformations performed on the content during conversion into an acceptable data format for transmission over the network. Each protocol generates a unique signature of protocol markers in accordance with the specific details of the protocol implementation. As such, the teachings of the present invention may be generalized to any protocol using the specific protocol's unique protocol markers.

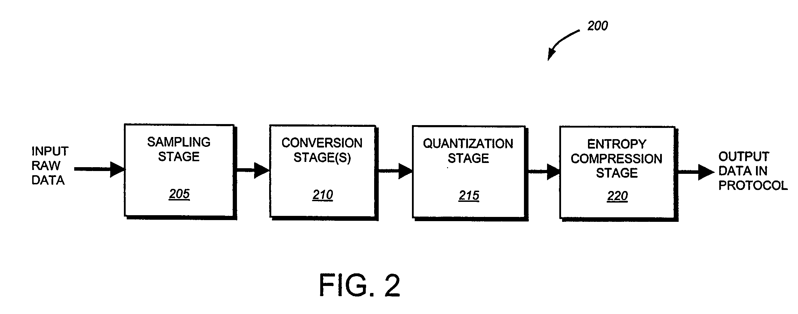

The process of converting the content into the appropriate format is typically defined by the specific protocol utilized. Broadly stated, protocol implementations utilize four basic steps: a sampling stage, one or more conversion stages, a quantization stage and an entropy compression stage. Fig. 2 is a flow diagram of an exemplary protocol conversion flow 200 used to convert content into an appropriate format in accordance with a specific protocol. The raw data or TVMD content is initially inputted into a sampling stage 205 where the raw data is sampled (or digitized) for use in the remainder of the protocol implementation. The sampling stage 205 may vary the sampling rate per the specific protocol specification to achieve a desired quality and/or file size. After the sampling stage 205, the sampled data is fed into one or more conversion stages 210 that convert the sample data into an appropriate format for a later quantization stage 215. Such a conversion may include, e.g., splitting an image into composite signals such as, e.g., the well-known RGB standard.

The quantization stage 215 typically divides the range of values obtained from the sampling stage into a series of non-overlapping, but not necessarily equal, sub-ranges. A discrete and unique value is then assigned to each sub-range, which reduces information content but achieves compression. The output of the quantization stage 215 is fed into an entropy compression stage 220. Entropy compression refers generally to a group of lossless compression techniques that may, for example, suppress repetitive sequences or utilize statistical encoding to reduce the size of the content embodied by the protocol. The output of the entropy compression stage and, thus, the protocol conversion flow 200, is the TVMD content encoded in the appropriate protocol.

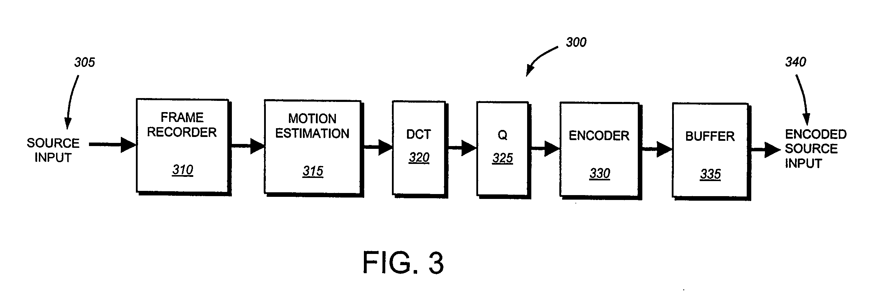

Fig. 3 is a schematic block diagram of an exemplary protocol conversion flow for the Moving Picture Expert Group part 2 (MPEG-2) video protocol. MPEG-2 protocol encoding and decoding is further described in ISO/IEC-13818, the contents of which are hereby incorporated by reference. It should be noted that the principles of the present invention may be utilized for any protocol that generates known protocol markers and is not limited to graphics, image, video or audio encoding protocols. As such the description of encoding using MPEG-2 should be taken as exemplary only.

The source input 305 e.g., audio-visual scene signals or frames, is fed into a frame-reordering stage 310. The frame reordering stage 310 ensures that individual frames of the video are in the proper order to be encoded depending on the individual frames type. For example, in the MPEG-2 standard, Intra pictures (I pictures) are coded using only information present in the picture itself, Predicted pictures (P pictures) that are coded with respect to the nearest previous I or P pictures and Bi-directional pictures (B pictures) use both a past and a future picture as a reference. Thus, for example, a B picture must be encoded after all pictures that it relies upon have been encoded. The frame reordering stage 310 associates the pictures into a proper order for encoding.

The properly ordered frames are then forwarded to a motion estimation stage 315. In accordance with the MPEG-2 protocol, the motion estimation stage operates on macroblocks, which illustratively comprise 16 x 16 pixels within a frame. During the motion estimation stage 315, a selected macro-block of a current frame is compared with all 16 x 16 regions of the frame that is being used to predict from, e.g., a previous I or P picture. The 16 x 16 region with the least mean-squared error from the current macro-block is then selected and a motion vector is encoded which specifies the 16 x 16 region that is being utilized to predict from and an error value for each pixel in the macro-block.

The output of the motion estimation phase 315 is then fed into a discrete cosign transformation (DCT) function 320. The DCT 320 transforms 8 x 8 blocks of pixels from a spatial domain to a frequency domain. More generally, the DCT 320 converts a block of pixels into a block of transformed coefficients, wherein the coefficients represent the spatial frequency components which make up the original block. After applying the DCT 320 the output is then fed to a quantization function (Q) 325. For a typical 8 x 8 block, most of the DCT coefficients are almost zero ("near-zero"). Thus DCT coefficients that are not close to zero are typically clustered around the DC value in the block. In the quantization step, the DCT coefficients are quantizied so that the near-zero coefficients are set to a zero value and the remaining coefficients are represented with a reduced precision. This is typically achieved by dividing each coefficient by a positive integer, which results in a loss of information but improved compression. Quantization may be achieved through use of a quantization table (QT) and dividing each element of the DCT results by the appropriate entry in the QT. Further compression is achieved by exploiting the statistical redundancies within quantizied DCT coefficient data. The 8 x 8 block is then ordered via a well-known zig-zag pattern to create a large run of zeros. The non-zero coefficients, which are typically clustered near the beginning of the zig-zag ordering, are encoded (at encoder stage 330) using a conventional variable length coding scheme. The large run of zeros, which is typically at the end of the ordering, is encoded using a run-length encoding, which typically transmits a specified number identifying a number of zeros to be transmitted. This further compresses the data. The output of the encoding stage 330 is fed into a buffer 335 for later transmission as encoded output data 340. The buffer 335 may be utilized to ensure a constant bit rate flow from the output of the encoder to match any requisite data flow of the desired transmission medium.

In the above example of the MPEG-2 protocol conversion flow, various protocol markers are generated during the various transformations. These protocol markers include discrete cosine (DC) coefficients, motion vectors, and quantization results. By comparing the protocol markers generated by the encoding of content using the MPEG-2 protocol, data may be quickly identified.

### C. Content Matching By Protocol Makers

As noted above, the representation of "natural" real-world signals in a distributed environment is defined by a protocol, i.e., is a process by which the natural signal's information content is transformed and prepared for transfer over the distributed storage medium. Included within the transformed content is a set of protocol markers that has been computed from the original information. In accordance with the novel technique described herein, these protocol markers may be utilized as a signature to efficiently identify the original information. The markers, or "content signature", may then be used in a content-based decision process to store, distribute or transport the content in a distributed networking environment. In one embodiment, the use of protocol markers reduces the amount of resources required in the analysis of content between two given locations in a distributed network. For example, if the content at point A is identical to content at point B, it is not necessary to transfer the content from point A to point B across a network. Only the markers are transferred for comparison. By utilizing the novel technique described herein, the required bandwidth necessary to transmit information used to determine the identification of the content at various points is significantly reduced.

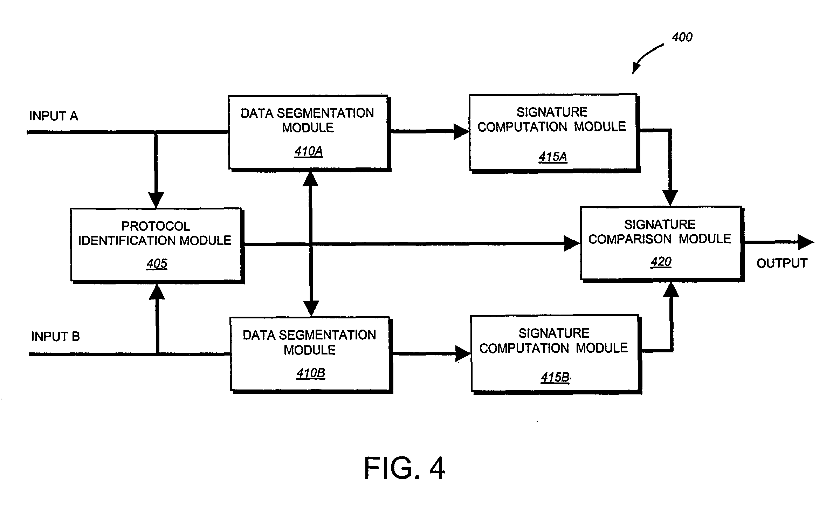

Fig. 4 is an exemplary flow diagram of a content comparator 400 adapted to compare two different sets of content to determine if they are identical in accordance with an illustrative embodiment of the present invention. Two content inputs (Input A and B) are received at a protocol identification module 405 and at respective data segmentation modules 410A and 410B. The protocol identification module 405 analyzes the received inputs and uses various stored databases to identify the protocol utilized by the inputs. This may be accomplished by, for example, analyzing metadata of the received inputs or by comparing various blocks of their content with known protocol markers that are unique to a given protocol. The identification of a protocol of received content input is well-known to those skilled in the art and may be accomplished using a wide variety of techniques.

The data segmentation modules 410A and 410B select various segments of the received content input for comparison. These data segments may be selected according to the identified protocol implementation to ensure whether the analyzed segments contain sufficient protocol markers to perform signature computation and analysis. For example, certain protocols may store metadata or other protocol markers in a header or footer of a file. When such protocols are utilized, the data segmentation module 410 select those appropriate data segments from the input and passes them to a signature computation module 415. More generally, each data segmentation module 410 selects appropriate segments from the entire content input for delivery to the appropriate signature computation module 415A, B.

The signature computation module 415 uses the delivered content segments to generate a signature of the content. Illustratively, such a signature may be computed by analyzing the content and identifying appropriate protocol markers. In the example of a JPEG (Joint Picture Expert Group) protocol, protocol markers could include discrete cosine (DC) components, escape sequences, and/or a number of zeros. Similarly, in the example of MPEG (Motion Pictures Expert Group) protocol, protocol markers include those of the JPEG protocol and various motion vectors. The identified protocol markers comprising the content signature are then fed into a signature comparison module 420. The signature comparison module 420 compares the two generated signatures of the inputs to determine if they are identical. It should be noted that the exemplary content comparator 400 may be implemented in hardware, software, firmware or a combination thereof in accordance with alternate embodiments of the present invention. More generally, a content comparator 400 may be comprised of a plurality protocol marker identifiers, comprising of a protocol identification module 405, a data segmentation module 410 and a signature computation module 415, associated with one or more signature comparison modules 420.

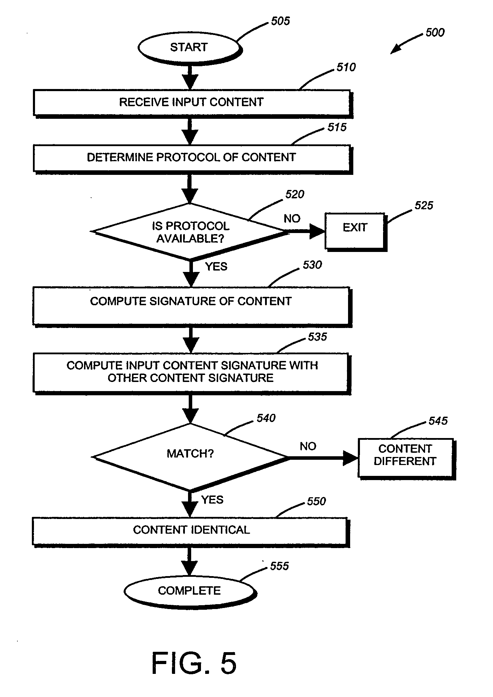

An exemplary procedure 500 for comparing received content with local content is shown in the flowchart of Fig. 5. As used herein, the term "local content" refers to data content that is stored on locally attached disks and may be readily accessed without using networking commands. Note that procedure 500 may be implemented in a network to determine if, for example, information being written to a remote disk that is identical to information stored locally. If the information is identical, a local device/system may decide not to expend the network bandwidth needed to write the information to the remote disk.

The procedure initially begins in step 505 and proceeds to step 510 where the content is received at a local device via a write request directed over a network or by any other acceptable data transfer means. In step 515, the protocol used to encode the received content is determined. As noted above, the determination of a protocol used to encode content may be determined using a variety of techniques that are well-known to those skilled in the art.

After the protocol of the received content has been determined, in step 520 a determination is made whether the protocol is available for comparison. For example, it may be detected that the received content is encoded in the TIFF protocol; however, the hardware or software implementation of the system embodying the inventive procedure does not contain the TIFF protocol markers for use when computing a signature of the received content. This could occur when, for example, a new protocol is created, but before appropriate protocol markers for signature generation are implemented in the system embodying the procedure. If the protocol is not available, the procedure exits in step 525 without comparing the two data contents.

However, if the protocol is available, then, in step 530, the procedure computes the signature of the received content using the appropriate protocol markers for the protocol associated with that content. Next, in step 535, the computed signature of the received input content is compared with the local content signature and, in step 540 a determination is made as to whether a match has occurred. If there is no match between the received input content and the local content signatures, the procedure branches to step 545 and identifies the received content as being different from the local content. Otherwise the procedure continues to step 550 and identifies the received content as being identical to the local content. The procedure then completes in step 555.

### D. Caching Using Protocol Markers

In an illustrative embodiment, the techniques of the present invention may be implemented by a network caching device. By analyzing received data content, a caching device may quickly determine whether the data is already stored in its network cache. If such data is already stored in its cache, the network caching device may terminate the transmission and utilize the stored copy of the content. The use of a stored, local copy may significantly improve system performance and reduce the amount of network bandwidth utilized.

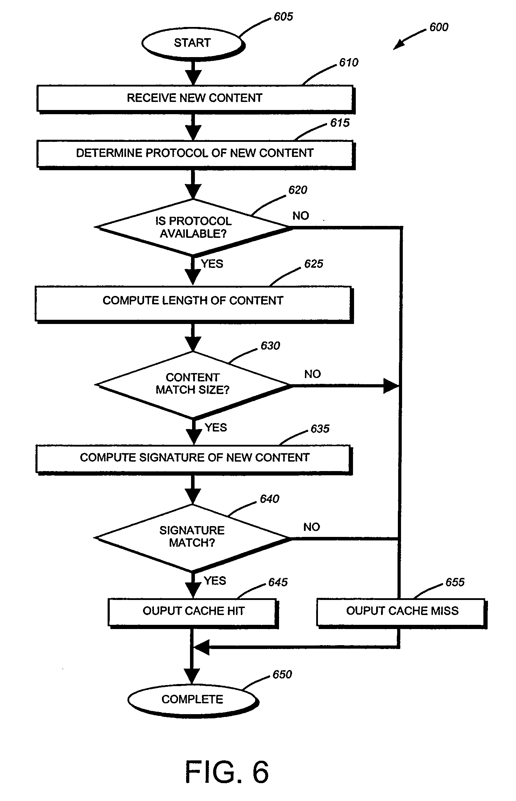

An exemplary procedure 600 for implementing the teachings of the present invention within a network caching environment is shown in the flowchart of Fig. 6. The procedure begins in step 605 and continues to step 610 where the network caching device receives new content. The new content may be received by the caching device by way of data transmission from another device in the network. In step 615, a determination is made as to the protocol of the new content using conventional protocol determination techniques.

Once the protocol has been determined, a determination is made as to whether the protocol is available in this particular network caching device (step 620). If the protocol is not available the procedure branches to step 655 where a cache miss is generated and output. This may occur when, for example, appropriate protocol markers for the identified protocol have not been incorporated into the network caching device. Otherwise the procedure continues to step 625 where the length of the new content is computed. This may be accomplished by conventional techniques used to identify the size of a data file. In step 630, the length of the content stored in the network cache is compared with the length of the new content to determine if there is a match. If not, the new content is not the same size as the stored content and the procedure branches to step 655 and outputs a cache miss.

However, if there is a match the procedure continues to step 635 where the signature of the new content is computed using known protocol markers associated with the identified protocol of the new content. Then, in step 640, the computed signature of the new content is compared with the signature of content stored in the network cache. If the two signatures do not match, the procedure branches to step 655 and outputs a cache miss. Otherwise, the procedure continues to step 645 where a cache hit is generated and output. The procedure then completes at step 650. In alternate embodiments, a network caching device only utilizes the generated signature of the new content in making a cache hit determination.

The concepts used in a cache device can be generalized to include storage resource management (SRM) techniques. For example, file walking a file system is possible from a host device. The file walking system stores metadata associated with each file in a data structure and/or database. When protocol markers are included in the metadata a more robust identification technique is available to identify repeated files.

To summarize, the present invention provides a technique for identification of information based upon protocol markers. By using *a priori* knowledge of specific protocol implementations, a set of protocol markers may be obtained from a specified file to generate a signature of the content. The signature may then be compared with signatures of other information to quickly differentiate and/or compare information content. Using the principles of the present invention, only the protocol markers comprising the signature of the content need to be transmitted and compared to differentiate between two data contents.

The foregoing description has been directed to specific embodiments of this invention. It will be apparent, however, that other variations and modifications may be made to the described embodiments, with the attainment of some or all of their advantages. Specifically, it should be noted that any protocol may be utilized with the teachings of the present invention provided that the protocol generates acceptable markers for use in creating a signature of content. Additionally, the procedures or processes described herein may be implemented in hardware, software, embodied as a computer-readable medium having program instructions, firm ware, or a combination thereof. Therefore, it is the object of the appended claims to cover all such variations and modifications as come within the true spirit and scope of the invention.

## Claims

1. A method for comparing a first content with a second content to determine whether the contents are identical, the method comprising the steps of:
identifying a protocol encoding the first content and second content;
computing a first signature of the first content and a second signature of the second content; and
comparing the first computed signature with the second signature to determine whether the first content is identical to the second content.

2. The method of claim 1 further comprising the steps of:
selecting a first set of data segments from the first content and a second set of data segments from the second content; and
using the selected first set of data segments and the second set of data segments to compute the first signature and the second signature.

3. The method of claim 2 wherein the selected first set of data segments and second set of data segments comprise locations associated with one or more protocol markers.

4. The method of claim 1 wherein the step of computing the signature of the first content and the signature of the second content further comprises the steps of:
identifying one or more protocol markers associated with the first content; and
identifying one or more protocol markers associated with the second content.

5. The method of claim 4 wherein the one or more protocol markers associated with the first content comprises discrete cosine coefficients.

6. The method of claim 4 wherein the one or more protocol markers associated with the second content comprises discrete cosine coefficients.

7. The method of claim 4 wherein the one or more protocol markers associated with the first content comprises motion vectors.

8. The method of claim 4 wherein the one or more protocol markers associated with the second content comprises motion vectors.

9. The method of claim 4 further comprising the steps of:
identifying a length of the first content; and
identifying a length of the second content.

10. A content comparator adapted to compare first content with a second content, the comparator comprising:
a protocol identification module configured to identify a first protocol associated with the first content and a second protocol associated with the second content;
a plurality of data segmentation modules configured to select a set of data segments from each of the first content and the second content;
a plurality of signature computation modules configured to generate a first signature of the first content and a second signature of the second content; and
a signature comparison module configured to compare the first signature with the second signature.

11. An apparatus for comparing a first content with a second content, the apparatus comprising:
means for identifying a protocol encoding the first content and the second content;
means for selecting a set of data segments from the first content and the second content;
means for computing a signature of the first content and a signature of the second content; and
means for comparing the computed signature of the first content with the computed signature of the second content.

12. The apparatus of claim 11 wherein the selected data segments comprises locations associated with one or more protocol markers.

13. The apparatus of claim 11 wherein the means for computing the signature of the first content and the signature of the second content further comprises:
means for identifying one or more protocol markers associated with the first content; and
means for identifying one or more protocol markers associated with the second content.

14. The apparatus of claim 13 wherein the one or more protocol markers associated with the first content comprises discrete cosine coefficients.

15. The apparatus of claim 13 wherein the one or more protocol markers associated with the second content comprises discrete cosine coefficients.

16. The apparatus of claim 13 wherein the one or more protocol markers associated with the first content comprises motion vectors.

17. The apparatus of claim 13 wherein the one or more protocol markers associated with the second content comprises motion vectors.

18. The apparatus of claim 13 further comprises:
means for identifying a length of the first content; and
means for identifying a length of the second content.

19. A method to compare a first content with a second content in a network storage environment, the method comprising the steps of:
receiving the first content;
computing a signature of the first content;
comparing the computed signature of the first content with a signature of the second content; and
identifying, if the computed signature of the first content matches the signature of the second content, that the first content is identical to the second content.

20. The method of claim 19 wherein the step of computing the signature of the first further comprises the steps of:
identifying a set of protocol markers associated with the content; and
generating the signature from the identified set of protocol markers.

21. The method of claim 19 wherein the set of protocol markers further comprise a set of discrete cosine coefficients.

22. The method of claim 19 wherein the set of protocol markers further comprises one or more motion vectors.

23. The method of claim 19 wherein a size of the received content is utilized in creating the signature.

24. A method for identifying content using a protocol associated with the content as a signature, the method comprising the steps of:
determining the protocol associated with the content;
identifying a set of markers associated with the protocol;
obtaining a set of markers from the content using the set of marker associated with the protocol; and
generating a signature of the content using the identified markers.

25. The method of claim 24 wherein the identified markers are within a subset of the entire content.

26. The method of claim 24 wherein a size associated with the content is utilized to uniquely identify the content.

27. The method of claim 24 wherein the signature is utilized in a network caching device to determine whether data should be forwarded from the network caching device.

28. The method of claim 24 wherein the signature is utilized to determine if a local copy of the content should be accessed.

29. The method of claim 24 wherein the signature is utilized to determine if a remote copy of the content should be accessed.

30. A protocol maker identifier for generating a signature of a content comprising:
a data segmentation module configured to select a set of data segments from the content; and
a signature computation module configured to generate the signature from the set of data segments.

31. The protocol maker identifier of claim 30 further comprising a protocol identification module configured to identify a protocol associated with the content.

32. The protocol maker identifier of claim 30 wherein the signature comprises a set of protocol markers.

33. The protocol marker identifier of claim 32 wherein the set of protocol markers comprises a set of discrete cosine transform coefficients.

34. A network caching device adapted to utilize a signature associated with a protocol for caching decisions, the network caching device comprising:
means for determining a protocol of new contents;
means for computing a signature of the content; and
means for comparing the computed signature of the new content with a signature of other content.

35. The network caching device of claim 34 wherein the means for computing a signature further comprises:
means for identifying a set of makers associated with the protocol associated with the content; and
means for obtaining appropriate markers associated with the content.
